# EUROPEAN PATENT APPLICATION

(11) **EP 2 626 131 A1**
(43) Date of publication of application: **14.08.2013**
(21) Application number: 12154508.1
(22) Date of filing: 08.02.2012
(51) Int. Cl.: B01J 21/18, B01J 23/40, B01J 23/42, B01J 35/00, B01J 23/745, B01J 37/02, B01J 37/08, B01J 35/10, B01J 37/18, H01M 4/90, C01B 31/08

(54) **Highly sinter-stable metal nanoparticles supported on mesoporous graphitic particles and their use**

(71) Applicant: Studiengesellschaft Kohle mbH, 45470 Mülheim (DE)
(72) Inventor: Galeano Nunez, Diana Carolina, 45468 Mülheim an der Ruhr (DE); Schueth, Ferdi, 45470 Mülheim an der Ruhr (DE); Bongard, Hans-Josef, 45470 Muelheim (DE)

(57) **Abstract**

The present invention refers to highly sinter-stable metal nanoparticles supported on mesoporous graphitic spheres, processes for their preparation and the use thereof as catalysts, in particular for high temperature reactions in reducing atmosphere and cathode side oxygen reduction reaction (ORR) in PEM fuel cells.

## Description

The present invention refers to highly sinter-stable metal nanoparticles supported on mesoporous graphitic bodies, in particular mesoporous graphitic particles, such as graphitic hollow spheres, processes for their preparation and the use thereof as catalysts, in particular for high temperature reactions in reducing atmosphere and cathode side oxygen reduction reaction (ORR) in PEM fuel cells.

Nanostructured materials are of great interest in many applications, for instance, in heterogeneous catalysis, energy storage, photonics and electronics. Their unique properties arise from the possibility of controlling and improving several properties of the material at the same time. Hollow spheres with tailored shell structures and of different compositions, such as carbon, polymer, silica or metal oxides are interesting as high performance catalyst supports as well as encapsulating shells. In particular, hollow carbon spheres, especially the ones containing graphitic domains, are very attractive due to their special properties like good thermal and chemical resistances, and electrical conductivity.

The production of hollow graphitic spheres (HGS) rely on either emulsion polymerization or hard templating methods. Emulsion polymerization methods are highly interesting due to the simplicity of the synthesis, however, although it is possible to get good graphitization degrees, the final material is usually highly microporous.

Nanocasting or hard templating methods offer the possibility to properly control the pore structure of the hollow sphere replica, but usually it is difficult to obtain graphitic structures. Successfully nanocasted HGS, additionally to significant graphitic domains, have large surface areas (>1000 m²/g), well-developed 3D interconnected mesoporosity with uniform and narrow pore size distributions, bimodal macro-meso pore size distributions, and additionally, the chemical nature of the carbon can be controlled during the synthesis process to some extent. When said HGS are used as catalyst supports, these characteristics do not only allow high metal loadings with high nanoparticle dispersion, but can also potentially provide an improvement of the stability of the supported metal nanoparticles. On the other hand, however, when the pore structure and graphitization of the HGS are poorly developed, the resulting HGS suffer from fast degradation of the catalyst during reaction conditions. Therefore, the procedure for their synthesis has to meet exact conditions to obtain reproducible results and a high performance material.

During the last decade, there has been an intense search for alternative catalyst materials, in particular for polymer electrolyte membrane fuel cells (PEMFC). The main reason of this is that the current commercial materials do not match the cost, activity and stability required for practical applications. In general, those limitations are related to the high loading of catalyst needed to get significant activity, the degradation of the catalyst during the operation of the fuel cell, and the high over potential for the oxygen reduction reaction (ORR) at the cathode. Platinum and its alloys are currently the best catalysts, therefore it is important to improve their long-term stability to meet the durability targets required for real world applications.

One approach to improve the long-term stability of the catalyst has been the use of well defined nanostructured supports. Recently, several new nanostructured supports like ordered hierarchical nanostructured carbon (OHNC), carbon nanotubes (CNTs), carbon nanofibers (CNFs), or mesoporous (2-50nm) carbons CMK-3, and hollow carbon shells have been studied as new alternatives of catalyst supports for PEMFC and direct methanol fuel cells (DMFC).

However, the materials obtainable so far are still not completely satisfactory in mechanical strength and lifetime. Accordingly, there is a need in improved materials for use in catalytic processes, in particular in the field of PEMFCs.

Although the benefits of nanostructure supports with respect to catalyst activity are generally recognized, not so much is known about the stability and durability of the catalysts in this kind of supports.

The inventors now found out that hollow graphitic bodies, in particular spheres (HGS), can be considered as potential candidates for catalyst stability improvement. According to the inventors, the structural properties of the HGS permit to enhance the utilization of the carbon support due to the inner macropore avoiding mass transfer limitation processes to the more inner catalyst particles. Additionally, the higher graphitization degree of the carbon may improve not only electron transport processes, but also corrosion resistance under harsh operational conditions. In line with the finding of the inventors, the three dimensionally interconnected mesoporosity does not only improve the dispersion of the catalyst, but also provides defined hosting sites which may hinder the catalyst particle's migration. This serves for preventing agglomeration and detachment of catalyst nanoparticles.

The inventors have also explored the properties of porous graphitic shells as high surface area support for hosting different metal nanoparticles. In addition to a full characterization and understanding of the efficient support hosting effect, they have tested the accessibility of the nanoparticles as electrocatalysts in the Oxygen Reduction Reaction (ORR) in PEM fuel cells. Structural stability of the inventive materials of Pt supported on HGS has been proven by thermal treatment at 850°C under inert atmosphere. During this treatment, Pt nanoparticles exhibited a limited, controlled and homogeneous growth within the shell pore structure only, indicating a high stability against sintering.

The invention is therefore directed to a process for preparing highly sinter-stable metal nanoparticles supported on mesoporous graphitic particles, said process comprising the steps of
a) impregnating particles having a porous basic framework with a graphitizable/carbonizable organic compound,
b) subjecting the particles obtained in step a) to a high temperature graphitization process, to obtain a graphitic framework in the porous basic framework,
c) subjecting the so-obtained graphitized particles to a process for removing the basic framework , to obtain a mesoporous graphitic framework,
d) impregnating the mesoporous graphitic particles obtained in step c) with a catalytically active metal such as Pt, Rh, Pd or Ru or a salt thereof,
e) subjecting the graphitic mesoporous particles obtained in step d) to a hydrogenation process to obtain catalytically active metal sites on and/or in the mesoporous particles.

The inventive process may also comprise a further step wherein the metal loaded graphitic mesoporous particles obtained in step e) are further calcinated in a high temperature range, preferably from 600 to 1000°C to increase the temperature stability of the particles.

The particle used in step a) may have a solid core and a porous shell or may have a porous structure throughout the whole particle. The pores may be mesopores with a size of 2 to 50 nm. A method for producing a particle with a mesoporous shell, such as templating with surfactants, can also be used, for example, to obtain a surfactant-templated mesoporous metal oxide framework.

In case of a solid core and a porous shell, the solid core and a porous shell may be composed of differing materials. For example, the core might be a polymeric organic material or mixtures thereof, surrounded by a porous layer of an inorganic oxide such as silica, zirconium dioxide (zirkonia), titania or hydrated precursors thereof which can be calcined to the respective oxidic framework structure. Besides the inorganic oxide which can constitute the porous shell and/or the solid core, it is possible to use other materials such as a polymer or mixtures thereof for polymer core.

The graphitizable/carbonizable organic compound is not particularly limited as long as the graphitization process which is generally carried out at elevated temperatures of more than 600°C in an oxygen-free atmosphere leads to a graphitic network structure within the porous basic framework of the particle and may be a, preferably radically, polymerizable hydrocarbon monomer such as divinyl compounds like divinylbenzene, or a combination of at least two organic resin-forming compounds such as resorcinol/formaldehyde, mesophase pitch or other monomers of polymers which have a high carbon yield in carbonization reactions.

In order to remove the basic framework, the graphitized particles are treated, preferably with an inorganic acid such as hydrofluoric acid or solutions with a high pH, optionally washed to remove traces of the acid. At the end of said removing step, graphitic mesoporous particles are obtained which can be impregnated with a solution of a salt of a catalytically active metal such as Pt, Rh, Pd or Ru, in an impregnation step where the volume of a solution of the metal salt is completely absorbed in the mesopores of the graphitic particles, and which can be optionally dryed. Said impregnation can be accomplished by using an alcoholic solution of a metal salt in an amount that the load of the particles with catalytically active metal is from 10 to 40 % by weight calculated on the basis of the complete weight of the final dry particles.

The thus obtained graphitic mesoporous particles loaded with the metal are subjected to a hydrogenation process which is preferably carried out as gas-phase hydrogenation. Such gas-phase reduction can be applied in a common pressure range at elevated temperatures from 100°to 450°C. By this hydrogenation, metal spots are provided in the mesoporous structure of graphite particles and even an optional final tempering step at elevated temperatures between does

The degradation of the active metal spots in the mesoporous structure is reduced to a large extent compared to materials prepared according to the prior art techniques.

The thickness of the shell with mesopores defined to be 2 to 50 nm around a solid core is generally between 10 to 80 nm and the final particles have a diameter of between 100 to 700 nm. Thus, the solid core might have a diameter in the range of 60 to 500 nm. Preferably, the diameter of the core is in the range of 100 to 400 nm and the shell thickness is 20 to 50 nm.

According to one specific aspect of the invention, in which the above process modifications can be used, HGS can be synthesized by replication through nanocasting of solid core/mesoporous shell (SCMS) silica. Said SCMS can be prepared by reacting at least one hydrolysable silicon compound in the presence of at least one pore-forming agent such as a hydrocarbon silicon compound to form SiO₂ precursor framework particles, drying the so obtained particles and calcinating them to obtain the desired mesoporous silica particles. As mentioned above, other methods for producing the porous, in particular mesoporous, shell, such as templating with surfactants can also be used, for example, to obtain a surfactant-templated mesoporous metal oxide framework. Besides silica which can constitute the porous shell and/or the solid core, it is possible to use other materials such as a polymer or mixtures thereof for the solid core.

The hydrolysable silicon compound is preferably a siloxan compound such as tetraalkyloxy silan, wherein alkyl can be the same or different and stands for a C₁-C₁₀ straight chain, branched or cyclic aliphatic group, which can be hydrolysed to a SiO₂ precursor framework, said framework optionally having hydroxyl groups which can be converted to Si-O-Si bonds during calcination.

Said hydrolyzation can be started before adding the hydrocarbon silicon compound to obtain a basic SiO₂ precursor framework which is then further reacted in the presence of said hydrocarbon silicon compound to obtain said SiO₂ precursor framework. By doing this, said hydrocarbon silicon compound can preferably be encapsulated into the SiO₂ precursor framework.

Said hydrocarbon silicon compound is used for creating the nanopores during the subsequent calcination process and is generally a silicon compound having at least one long chain C₁₀-C₃₀, preferably C₁₂-C₂₀ straight chain, branched or cyclic aliphatic group attached to the silicon.

Depending on the time of addition and molar ratio of the at least one hydrolysable silicon compound to the at least one hydrocarbon silicon compound, the thickness of the mesoporous shell around a solid SiO₂-core is generally between 20 to 80 nm and the particles have a diameter of between 100 to 600nm. Thus, the solid core might have a diameter in the range of 60 to 450 nm. Preferably, the diameter of the core is in the range of 200 to 400 nm and the shell thickness is 20 to 50 nm.

In order to obtain a mesoporous structure throughout the particle, it might be desirable to use one silicon compound only which serves as silicon compound and as hydrocarbon silicon compound for building up the mesoporous SiO₂ framework at the same time. In such case, alkoxy alkyl silanes might be used wherein the alkyl groups have the meaning as given for the respective compound above.

In the subsequent calcination step, the SiO₂ precursor framework structure converts to a SiO₂ framework structure, and the hydrocarbon silicon compound is decomposed to build up the mesoporous SiO₂-structure.

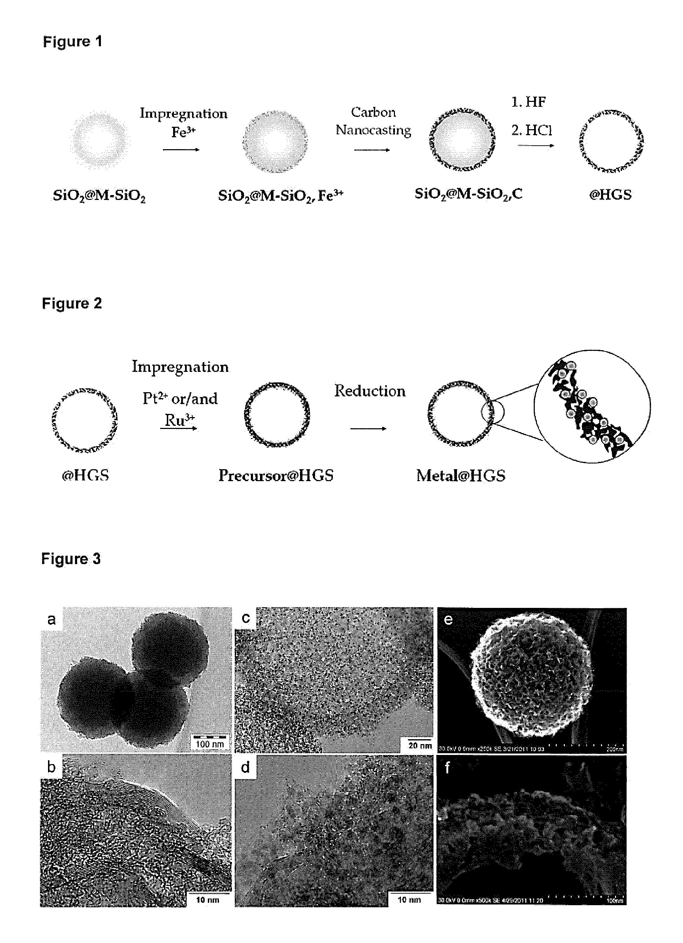

In the next step, the so obtained mesoporous silica particles are treated with a solution of a metal salt as graphitization catalyst. In more detail, the total pore volume corresponding to the mesoporous shell of the SCMS template (Fig. 1a) might be first impregnated with a metal salt such as Fe³⁺ as graphitization catalyst which is generally to be chosen in line with the monomer used for filling the pores. After evaporating the solvent of the metal salt solution, the pore system is preferably completely filled with a liquid monomer and an initiator, such as divinylbenzene (DVB) and azobisisobutyronitrile AIBN, or a solution thereof respectively. A gentle thermal treatment at temperatures from 60° to 100°C, leads to the polymerization of the monomer in the pore structure.

The liquid monomer might be used as such or in solution and may be selected from divinylbenzene, resorcinol/formaldehyde, mesophase pitch or other monomers of polymers which have a high carbon yield in carbonization reactions. The monomer might also have functional groups such as N-containing groups like amino, nitrile, amide, and others, which provide N-graphitic structures and which can interact with the catalytically active metal after impregnation and calcination.

The so obtained mesoporous structure where the pores are filled with said polymer is subjected to a graphitization process which is carried out during a high temperature treatment (optionally more than 1000°C), where the said metal species act as graphitization catalyst. In this process, metallic particles are formed, followed by the precipitation of graphitic domains over the surface of the catalyst particles at high temperatures. This process was found by the inventors to work with several metals as catalysts.

In such graphitization process, basically any metal species being capable of acting as graphitization catalyst can be used and the inventors have used any metal such as Fe³⁺, Ni²⁺ and Co²⁺ in order to find the best graphitization conditions for each metal and polymer. With DVB as monomer, good results are obtained with Fe³⁺ as graphitization catalyst.

The so-obtained graphitized particles (SiO₂@*m*-SiO₂,C) are then subjected to a desiliconization process by treating the particles with an acid such as hydrofluoric acid or solutions of high alkalinity to dissolve the SiO₂ and, optionally thereafter, with an acid such hydrochloric acid to remove the Fe³⁺ and to obtain the hollow graphitic structure (@HGS).

For the so-obtained HGS, the solid core might have a diameter in the range of 60 to 440 nm. Preferably, the diameter of the core is in the range of 200 to 300 nm and the ratio of shell thickness to the core diameter is 20 to 50 %. As the previous SiO₂ core is dissolved by HF, the total surface area of the HGS particles is increased.

The HGS material has the following properties:
- Temperature stable up to 600 - 700°C, with 40% of graphitic domains temperature stable up to 800°C.
- BET surface area: > 1000 m²/g, preferably more than 1400 m²/g
- < 0.5 wt% Fe remnant.

The so-obtained HGS are further treated with a solution of a salt of catalytically active metal, such as Pt, Rh, Pd or Ru, preferably via an impregnation step where the volume of the, preferably alcoholic, solution of the metal salt is completely absorbed in the pores of the HGS to obtain the Precursor@HGS. More preferably, the metal salt solution is used in an amount equal to the total pore volume of the HGS. The solution is preferably an alcoholic, such as ethanolic, solution of metal halogenide, particularly chloride.

In the next step, said Precursor@HGS particles are subjected to a hydrogenation process with hydrogen gas at an elevated temperature of between 200 and 400°C over a period of up to 10 hours to remove the hydrohalogenide and to obtain the Metal@HGS. The metal nanoparticles are homogeneously distributed over the surface within the pore system of the HGS in high concentration. The defined mesoporosity and high surface area of the graphitic carbon shells does not only allow the hosting of the nanoparticles in the pore system, but also high loadings of metal nanoparticles with uniform size distributions and high stability against coalescence. The metal load is preferably in a range of 10 to 40 wt-% calculated on the total amount of the particles by thermogravimetric analysis.

For the Pt@HGS material, said material exhibits active surface area, oxygen reduction onset potential and limiting current in the range of Pt@Vulcan.

### Description of the Figures

Figure 1 illustrates the HGS synthesis via nanocasting of DVB and catalytic graphitization with Fe³⁺.
Figure 2 illustrates preparing the metal nanoparticles on HGS by way of colloidal deposition and impregnation-reduction with hydrogen or ethylene glycol.
Figure 3 shows various micrographs as follows:
   a) TEM micrograph of SCMS silica template;
   b) HR-TEM of graphitic shell;
   c) HR-SEM micrograph of SCMS silica template;
   d,e) HR-SEM micrograph of Pt@HGS; and
   f) HR-SEM of cross sectional cutting of Pt@HGS.

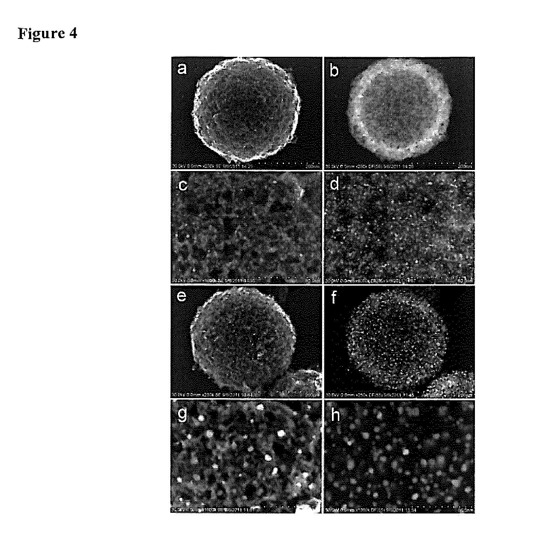

Figure 4 shows various micrographs (a,c,e,g) HR-SEM and (b,d,f,h) HR-STEM dark field images of the Pt@HGS: a-d) as made material; e-h) after thermal treatment at 850°C. The dark field HR-STEM shows that the Pt nanoparticles are highly distributed along the HGS support. In the HR-SEM image, it is possible to observe particles, however, this is not so clear due to the small size. Higher magnification of both images (Fig. 4c, d) shows that the Pt nanoparticles are highly monodisperse in size, with a particle size distribution ca. 1-2 nm. It is possible to observe a high population of particles with a homogeneous distribution over the surface of the HGS, and additionally figure 4d offers the possibility to observe the particles located at the interior of the shell pore structure. After the thermal treatment to 850°C under nitrogen atmosphere, the HR-SEM micrographs of the resulting materials are shown in figures 4e, f. The coalescence of the Pt nanoparticles was indeed prevented during thermal treatment at 850 °C under nitrogen. Figure 4f shows not only that the density of the particles decreased significantly, but also that the size of the particles increased. The growth of the nanoparticles after the thermal treatment was smooth and uniform leading to a mean particle size of ca. 4 nm. Since no big agglomerations of Pt were found outside of the shells, the growth of the Pt nanoparticles appears to be controlled and homogeneous in the pore system of the graphitic shells. After the thermal treatment, it is possible to recognize from the HR-SEM image (Fig. 4g) that there are particles mainly at the surface with particle sizes of ca. 5-6 nm, and most of the inner ones visible in the HR-STEM (Fig. 4h) are sized ca. 3-4 nm. This gives an indication that the particles at the surface may be more vulnerable to movement, and therefore more suitable to growth, most probably due to particle migration. However, the differences in size are not significant at all to conclude that the particle growth was not uniform.

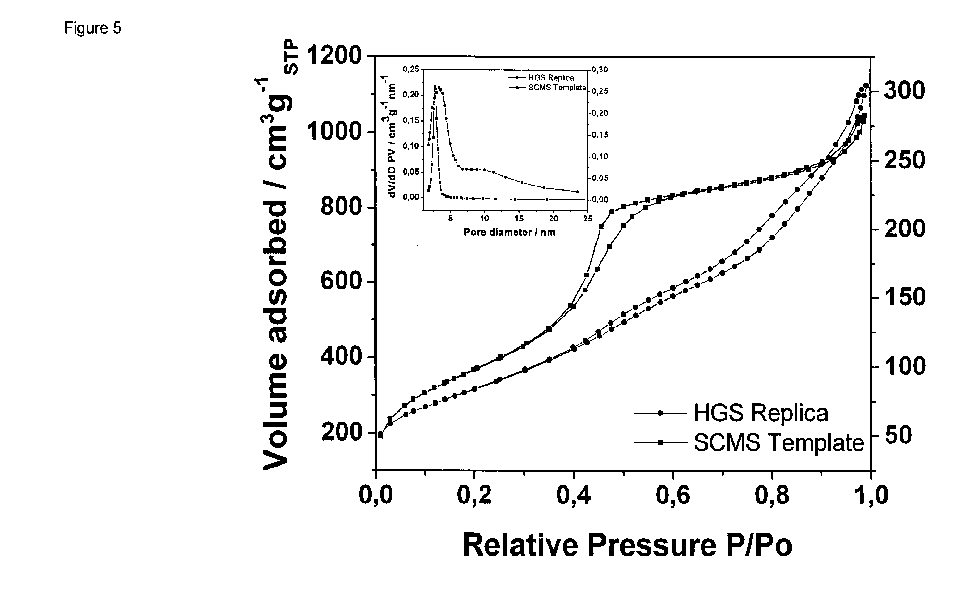

Figure 5 shows nitrogen sorption isotherms of SCMS template (square curve) and HGS replica (rhomb curve) and BJH pore size distributions (inset). Both isotherms are of type IV, characteristic of mesoporous materials. The SCMS silica template presents a surface area of 300 to 400 m²/g and a pore volume of 0,35 to 0,45 cm³/g. After nanocasting of the carbon shell and the dissolution of the silica template, the respective replica presents a significant increase in the surface area and pore volume to1130,87 m²/g and 1,61 cm³/g, respectively.

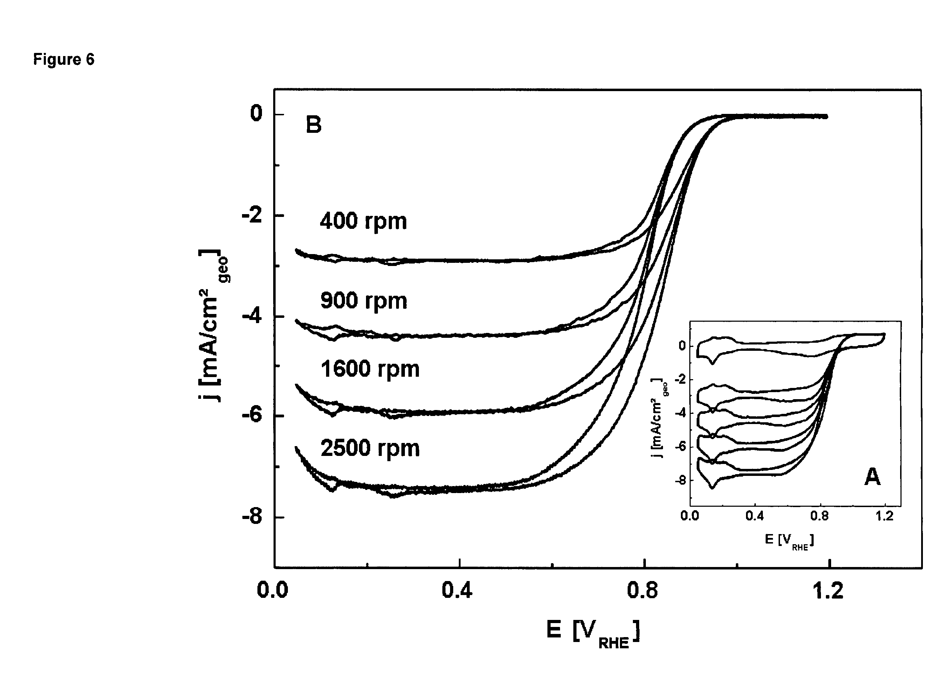

Figure 6 shows (A) ORR polarization curves of the hollow sphere based platinum catalyst before background-correction in O₂ saturated 0.1 M H₂SO₄ together with the base-cyclovoltammogram recorded in argon. All CVs are recorded with 50 mV/s sweep rate at room temperature. Four different rotation rates are employed (400, 900, 1600 and 2500 rotations per minute). The capacitive currents can clearly be seen, and (B) ORR polarization curves after background-subtraction. The same behavior as a standard fuel cell catalyst can be observed. The ORR polarization curves have the same shape as observed for standard fuel cell catalysts. No current is measured at potentials higher than 1.0 V. At lower potentials oxygen reduction takes place. The current density decreases in the so-called kinetic region (0.7 V - 1.0 V) and ultimately approaches a plateau in the diffusion-limited region (< 0.7 V) due to film diffusion.

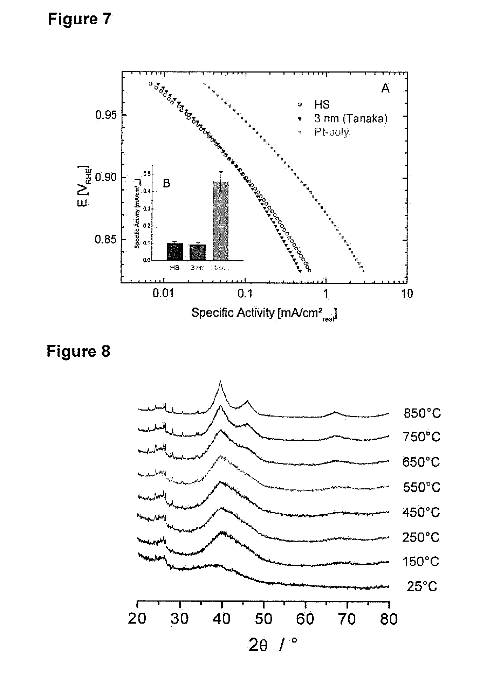

Figure 7 represents Tafel plots of polycristalline platinum, of a Tanaka catalyst with 3 nm Pt particle, and of the hollow sphere catalyst. All Tafel plots are derived from the positive sweep of ORR measurements in 0.1 M H₂SO₄ at 50 mV/s, 1600 rpm and room temperature. The Tafel plots for the commercial catalyst and polycristalline platinum are given for comparison. It is well-known that the specific activity of platinum nanoparticles is lower than for polycristalline platinum. The specific activity decreases with decreasing particle size, a phenomenon called the "particle size effect", which is discussed in several reviews. In order to make a "fair comparison" of a novel catalyst to a reference catalyst, this reference catalyst must show a similar particle size. This is the case for the hollow sphere based platinum catalyst and the commercial Pt/C catalyst (2.6 nm according to XRD). The Tafel plots show that the specific activity of the hollow sphere catalyst is comparable to the activity of the commercial catalyst. The special characteristics of the support neither increase nor decrease the specific activity compared to a standard catalyst consisting of platinum supported on a carbon carrier.

### Examples

The invention is further illustrated by the following Examples. In the Examples, the following methods have been applied.

### Description of the methods

The XRD patterns were recorded on a Stoe θ/θ diffractometer in Bragg-Brentano geometry (Cu Kα radiation).

Nitrogen sorption isotherms were measured with an ASAP 2010 adsorption analyzer (Micrometrics) at 77K. Prior to the measurements, the silica template and HGS replica were activated at 250°C for 7h and 12h, respectively. BET (Brunauer-Emmett-Teller) surface area was determined from the relative pressure range 0.06-0.2. Total pore volume using the volume adsorbed at a relative pressure of 0.97. Pore size distribution (PSD) curves were calculated by BJH (Barrett-Joyner-Halenda) method from the adsorption branch.

High resolution scanning electron microscopy (HR-SEM) and high resolution scanning transmission electron microscopy (HR-STEM) images were collected on a Hitachi S-5500 ultra-high resolution cold field emission scanning electron microscope. The instrument was operated at a maximum acceleration voltage of 30 kV. The samples were prepared on Lacey carbon films supported by a copper grid. The use of Duo-STEM Bright Field/Dark Field detector together with a secondary electron (SE) detector geometry allows simultaneous imaging of surface morphologies in scan mode, and dark field/bright field imaging in transmission mode.

The transmission electron microscopy (TEM) and high resolution transmission electron microscopy (HR-TEM) images of the samples were obtained on Hitachi H-7500 and HF-2000 instruments, respectively. The H-7500 microscope is operated at a maximum acceleration voltage of 120 kV. The HF-2000 instrument is equipped with a cold field emitter (CFE) and can be operated at a maximum acceleration voltage of 200 kV. Typically the samples were placed on a Lacey carbon film supported by a copper grid. Solid samples were deposited on the Lacey carbon film without previous dissolution.

### Electrochemical characterization

The measurement procedures follow the basic guidelines described in K.J.J. Mayrhofer, D. Strmcnik, B.B. Blizanac, V. Stamenkovic, M. Arenz, N.M. Markovic, Measurement of oxygen reduction activities via the rotating disc electrode method: From Pt model surfaces to carbon-supported high surface area catalysts, Electrochimica Acta, 53 (2008) 3181-3188.

The electrochemical measurements were conducted at room temperature in a 150 mL Teflon three-compartment electrochemical cell, using a rotating disk electrode (RDE) setup, a Gamry Reference 600 potentiostat and a Radiometer Analytical rotation controller. The potentiostat, the rotator and the gas flow were automatically regulated and programmed using LabVIEW software developed in-house. A graphite rod was used as the counter electrode, and a saturated Ag/AgCl Electrode (Metrohm) housed in a Tschurl Modification served as the reference electrode. However, all potentials are given with respect to the reversible hydrogen electrode (RHE) potential, which was experimentally determined for each measurement. The electrolyte was prepared with ultrapure water (18 MΩ, Millipore®) and conc. H₂SO₄ (*Normapur, DBH Prolabo*®). The specific activity of the oxygen reduction reaction is calculated from the RDE polarization curves recorded at a scan rate of 50 mVs⁻¹. In order to isolate current related to oxygen reduction, the RDE polarization curves were corrected for capacitive processes. For this purpose a cyclovoltammogram recorded with the same scan rate and potential window, but in an argon saturated solution, was subtracted from the oxygen reduction polarization curves. Solution resistance was compensated for via positive feedback. The residual uncompensated resistance was less than 4Ω in all experiments. The mass activity was calculated based on the specific activity and electrochemical active surface area (ECSA). The real surface area was determined via electrochemical oxidation of adsorbed carbon monoxide (CO-stripping). The CO-stripping curves were recorded in CO-free argon-purged electrolyte, after adsorbing CO in a potential region where no CO oxidation occurs, until the saturation coverage was reached.

### Example 1 - Synthesis of solid core-mesoporous shell silica template (SCMS)

The synthesis of the solid-core mesoporous-silica template is carried out in line with the procedure as described by G. Büchel et al., Adv. Mater. 1998, 10, 1036-1038.

A typical synthesis of 10 g of SCMS silica spheres is as follows. 32,9 mL of aqueous ammonia (28 wt%) were mixed with 500 g (632,9 mL) of ethanol and 120 mL of deionized water. After stirring for ca. 10 min, 23,6 mL of TEOS (98%) are added, and the reaction mixture was stirred for ca. 1 h. Afterwards, a mixture solution containing 14,1 mL of TEOS and 5,7 mL of C₁₈-TMS (90% tech., Aldrich) is drop-wise added (for ca. 20 min) to the colloidal solution containing the silica spheres and further reacted for 5 h without stirring. The resulting SCMS spheres are separated from the solution by centrifugation, dried at 75 °C overnight and further calcined at 550 °C under oxygen atmosphere to produce the final uniform spherical SCMS particles.

### Example 2 - Synthesis of Hollow Graphitic Spheres (HGS)

1 g of the SCMS material obtained in Example 1 is impregnated with an ethanolic solution of Fe³⁺ 2 M (0,4 mL) and dried overnight under air. Afterwards, a mixture of 0,37 mL of DVB and 0,012 g of AIBN is incorporated into the mesopores of the SCMS via incipient wetness method under Ar. The resulting material is heated at 75°C for 24 hours to complete the polymerization of Divinyl benzene (DVB) under Ar. The carbonization of the polymerized DVB into the mesopores was carried out at 1000°C for 4h under nitrogen flow with a heating rate of 5°C/min.

The so obtained SCMS silica template was dissolved by using hydrofluoric acid 10% in water during 6 h. After the removal of the HF remnant, the material was treated with an excess of concentrated hydrochloric acid to remove the Fe. The material was washed four times with millipore water and once with ethanol. The washing process was carried out by centrifugation (14000 rpm, 5 min) and redispersion assisted by ultrasound (5 min) each one. Finally, the material was dried at 75°C overnight.

### Example 3 - Metal nanoparticles supported on HGS

Pt metal nanoparticles (20 wt.%) were synthesized via impregnation of an ethanolic solution of H2PtCl6 xH2O in the pore structure of HGS obtained in Example 2 and reduction under H₂ atmosphere at 250°C for 3h.

As comparative material, Pt metal nanoparticles (20 wt.%) supported on HGS by colloidal deposition, were synthesized via polyol reduction using ethylenglycol (EG). In this case HGS and H₂PtCl₆·*x*H₂O were mixed in EG and heated at 50°C for 30 min to dissolve completely the Pt precursor. Subsequently, the solution was rapidly heated at 190°C and kept under reflux for 2 h. After the reduction was completed, EG was removed by centrifugation and the material was washed three times with ethanol and dried at 75°C.

Thermal stability test of the materials was carried out heating the materials Pt@HGS to 900°C under nitrogen atmosphere for 10 hours. The results of the tests are shown in Fig. 4.

### Stability Tests

In order to determine if the growth of the Pt nanoparticles is accompanied by the migration of the nanoparticles, hosted in the shell, to the outer surface, they inventors have analyzed the samples before and after thermal treatment by XPS.

The quantitative results of the surface analysis of both materials are shown in Table 1.

**Table 1 - Summary of the elemental composition of the as-made and thermal treated Pt@HGS materials determined by different analytical methods.**

| Catalyst | Element composition .wt% (.at%) | | | | |
|---|---|---|---|---|---|
| | XPS (Surface anal.) | | | Elemental Analysis | TGA |
| | Pt | O | C | Pt | Pt |
| Pt@HGS as made | 14.0 | 3.4 | 82.6 | 19.5 | 22 |
| | (1) | (3) | (96) | | |
| Pt@HGS after thermal treatment | 14.1 | 1.2 | 84.8 | 19.8 | 22 |
| | (1) | (1) | (98) | | |

The values are given in weight percent (.wt%) and the values given in parenthesis correspond to the atomic percentage (at.%).

It was observed that both Pt@HGS materials, as made and after thermal treatment, present the same amount of Pt at the surface (14 wt.%). Here, surface is considered to be the first ∼10 nm depth of the graphitic shell. This is a clear indication that the growing process is not accompanied with a migration of the inner particles to the outer surface. Additionally, it has been observed that the oxygen content decreases during the thermal treatment.

In order to test the hosting properties of the support, the inventors have tested the thermal stability of the Pt nanoparticles, monitoring the behaviour by *in-situ* XRD and analysing the initial and final materials by HR-TEM and HR-SEM. Since carbon reacts with oxygen, the thermal treatment had to be carried out under protective atmosphere, and this kind of materials would only be suitable for high-temperature applications under reducing conditions. The stability of the carbon shell in air was investigated by TGA, showing thermal stability up to ca. 900 °C.

The results of *in-situ* XRD of Pt@HGS of 20 wt.% are shown in Figure 8. The materials were heated in the XRD chamber under nitrogen atmosphere with a rate of 2 K min-1 to 850°C with intervals of 50 °C. Previous to the recording of the diffraction pattern at each temperature, the temperature was held for 30 min. These results clearly indicate that up to a treatment temperature of 650°C no significant particle growth occurs, and even after treatment at 850°C, the Pt-particles are still very small, as indicated by the broad reflections.

### Electrochemical characterization of the inventive metal nanoparticles supported on the mesoporous, hollow carbon spheres

A voltammogram of the platinum nanoparticles supported on the mesoporous, hollow carbon spheres is compared to a voltammogram of a standard fuel cell catalyst (3 nm, Tanaka) in Fig 1. The hollow sphere-based catalyst shows the same characteristic platinum features as the 3 nm standard catalyst: the so-called H_{upd}-region between 0.05 V and 0.35 V, subsequent the double-layer potential region, and at potentials higher than 0.7 V, adsorption of oxygenated species begins. Thus, it is evident that the platinum nanoparticles are in electrical contact with the working electrode, hence the hollow sphere support is sufficiently conductive.

The most significant difference between the polarization curves for the two catalysts is the larger capacitance of the hollow sphere catalyst. The carbon support is known to contribute to the capacitive currents. Both measurements were carried out with the same amount of platinum at the working electrode (i.e. 30µg_{Pt}/cm²). However the hollow sphere catalyst had a lower platinum loading (22 wt%) than the commercial catalyst (46 wt%). The higher capacitance can therefore easily be explained by the resulting higher absolute amount of carbon on the working electrode for the hollow sphere catalyst.

The inventive synthesized catalyst reveals the same behavior in the base-cyclovoltammogram as the commercial catalyst. Based on this result it is reasonable to expect that the hollow sphere catalyst is also active for the oxygen reduction reaction (ORR).

This was confirmed experimentally as shown in Fig. 6. Fig 6A shows the shapes of the ORR polarization curves of the hollow sphere catalyst in oxygen saturated 0.1 M H₂SO₄ at different rotation rates and the base voltammogram recorded in argon. Fig. 6B shows the graphs for the ORR after background correction via subtraction of the base-voltammogram. The non-faradaic currents due to charging and decharging of the platinum as well as the carbon carrier are eliminated with this background correction. The resulting current-potential curves only contain faradaic currents related to the reduction of oxygen.

Table 2 summarizes the results for the average specific activity, mass activity and electrochemical active surface area (ECSA) in 0.1 M H₂SO₄ at 0.9 V, 50 mV/s, 1600 rpm and room temperature.

**Table 2**

| Catalyst | SA [mA/cm²ᵣₑₐₗ] | MA [A/mg_{Pt}] | ECSA [m²/g_{Pt}] |
|---|---|---|---|
| Pt@HGS | 0.101 ± 0.011 | 0.109 ± 0.028 | 108 ± 18 |
| 3 nm | 0.094 ± 0.012 | 0.089 ± 0.025 | 95 ± 16 |
| Pt-poly | 0.458 ± 0.056 | - | - |

Fig 7 (B) compares the average measured specific activities at 0.9 V in 0.1 M H₂SO₄. It can be seen that the difference between the mesoporous hollow sphere catalyst and the commercial 3 nm catalyst is within the error of the measurement. This absence of a difference is intriguing, since the high porosity of the support for the hollow sphere catalyst might be expected to introduce mass transport limitations. In the case of such mass transport limitations, parts of the Pt surface are not accessible for the ORR. Thus, a decrease in SA, and in any case MA, might be expected. However as both the specific activity and the mass activity of the two catalysts are the same, there is no indication of mass transport limitation due to the mesoporous network of the hollow sphere catalyst. This shows that all the inventive nanoparticles are well accessible for oxygen reduction.

In summary, the inventive hollow sphere catalyst has at least the same catalytic properties as a standard high surface area fuel cell catalyst of comparable particle size. The stability of the catalyst is improved and the porous network helps to stabilize the catalyst against degradation mechanisms like particle detachment and/or particle agglomeration.

The inventive materials are promising for stabilization of the metal nanoparticles under electrochemical conditions, and most recent tests of the inventors reveal that the number of degradation cycles is largely increased for the inventive materials.

By the present invention, highly sinter-stable metal nanoparticles supported on hollow graphitic spheres are provided which have a
- uniform particle size
- narrow pore size distribution
- large specific surface area and mesopore volume.
- well-developed 3D interconnected bimodal porosity
- easy control of the chemical nature of the carbon.

The defined mesoporosity and high surface area do not only allow the hosting of high loadings of metal nanoparticles with uniform size distributions within the pore system, but also high stability against sintering at temperatures up to 850°C.

Particle growth is not visible in HGS, while a common material such as Vulcan particle growth plays a significant role. Detachment or dissolution of Pt nanoparticles are common degradation mechanism, but cannot be observed for the inventive materials. 80% of the electrochemical active surface area remains after 7200 potential cycles in PEMFCs.

In particular, the inventive Pt@HGS catalyst exhibits standard activity towards ORR, offering in addition high structural stability to the metal nanoparticles. Nitrogen doped HGS having nitrogen functional groups increase metal-support interactions which may result in further advantages: enhanced metal nanoparticle binding leading to higher durability, and modification of the electronic structure of the metal nanoparticles could increase the catalytic activity.

## Claims

1. Process for preparing highly sinter-stable metal nanoparticles supported on mesoporous graphitic particles, said process comprising the steps of:
a. impregnating particles having a porous basic framework with a graphitizable organic compound,
b. subjecting the particles obtained in step a) to a high temperature graphitization process, to obtain a graphitic framework in the porous basic framework,
c. subjecting the so-obtained graphitized particles to a process for removing the basic framework, to obtain a mesoporous graphitic framework,
d. impregnating the mesoporous graphitic particles obtained in step c) with a catalytically active metal such as Pt, Rh, Pd or Ru or a salt thereof,
e. subjecting the graphitic mesoporous particles obtained in step d) to a hydrogenation process to obtain catalytically active metal sites on and/or in the mesoporous particles.

2. Process according to claim 1 wherein the graphitic mesoporous particles obtained in step e) are further calcinated in a high temperature range, preferably from 600 to 1000°C to increase the temperature stability of the particles.

3. Process according to claim 1 or 2 wherein the particles used in step a) have a solid core and a porous shell.

4. Process according to claim 3 wherein the solid core and a porous shell are composed of differing materials.

5. Process according to claim wherein the core and/or the shell of the particles used in step a) comprise a porous inorganic oxidic material such as silica, zirconium dioxide and the like.

6. Process according to anyone of the foregoing claims wherein the graphitizable organic compound is a, preferably radically, polymerizable hydrocarbon monomer or a mixture of organic reaction partners for building up a polymeric structure.

7. Process according to anyone of the foregoing claims wherein, in step c), the graphitized particles are treated with an inorganic acid.

8. Process according to anyone of the foregoing claims wherein, in step d), the graphitic mesoporous particles are impregnated with a solution of a salt of a catalytically active metal such as Pt, Rh, Pd or Ru, in an impregnation step where the volume of a solution of the metal salt is completely absorbed in the mesopores of the graphitic particles, and optionally drying the obtained particles,

9. Process according to anyone of the foregoing claims wherein, in step e), the graphitic mesoporous particles obtained in step d) are subjected to a gas-phase hydrogenation process.

10. Process for preparing highly sinter-stable metal nanoparticles supported on mesoporous graphitic bodies according to claim 1 comprising the steps of:
a. reacting at least one hydrolysable silicon compound in the presence of at least one pore-forming agent such as a hydrocarbon silicon compound to form SiO₂ precursor framework particles, drying the so obtained particles and calcinating them to obtain porous silica particles,
b. treating the porous silica particles obtained in step a) with a solution of a metal salt as graphitization catalyst and adding a liquid graphitazable and polymerizable organic monomer and an initiator,
c. subjecting the particles obtained in step b) to a high temperature treatment graphitization process,
d. subjecting the so-obtained graphitized particles to a desiliconization process by treating the particles with hydrofluoric acid or a solution with high pH value to dissolve the SiO₂ and, optionally thereafter with an acid to remove the graphitization catalyst,
e. treating the graphitic hollow particles obtained in step d) with a solution of a catalytically active metal salt, such as Pt, Rh, Pd or Ru, preferably via an impregnation step where the volume of the solution of the metal salt is completely absorbed in the pores of the particles, and optionally drying the obtained particles,
f. subjecting the metal salt-loaded particles obtained in step e) to a hydrogenation process with hydrogen, preferably at an elevated temperature of between 200 and 400°C, over a period of up to 10 hours to remove any salt residue such as a hydrohalogenide, and drying the obtained particles, and
g. optionally calcinating the obtained particles in a temperature range of 600 to 1000°C to obtain temperature stable particles.

11. Process for preparing highly sinter-stable metal nanoparticles supported on graphitic bodies comprising the steps of
a. treating graphitic porous particles with a solution of a catalytically active metal salt, such as Pt, Rh, Pd or Ru, preferably via an impregnation step where the volume of the solution of the metal salt is completely absorbed in the pores of the particles, and optionally drying the obtained particles,
b. subjecting the metal salt-loaded particles obtained in step a) to a hydrogenation process, preferably a gas phase hydrogenation with hydrogen at an elevated temperature of between 200 and 400°C over a period of up to 10 hours, to remove any salt residue such as a hydrohalogenide, and drying the metal-loaded particles, and
c. optionally calcinating the obtained particles in a temperature range of 600 to 1000°C to obtain temperature stable metal-loaded particles.

12. Highly sinter-stable metal nanoparticles supported on graphitic bodies, obtained by any of the processes claimed in anyone of claim 1 to 11.

13. Use of the particles as claimed in claim 12 as catalyst, in particular for cathode side oxygen reduction reaction (ORR) in PEM fuel cells.
